# EUROPEAN PATENT APPLICATION

(11) **EP 3 982 277 A1**
(43) Date of publication of application: **13.04.2022**
(21) Application number: 20822980.7
(22) Date of filing: 09.06.2020
(51) Int. Cl.: G06F 16/783, G06F 16/735, G06F 16/75, G06N 3/08

(54) **IMAGE DATA RETRIEVAL METHOD, DEVICE, AND PROGRAM USING DEEP LEARNING ALGORITHM**

(30) Priority: 10.06.2019 KR 20190067794; 10.06.2019 KR 20190067795; 23.01.2020 KR 20200009164; 04.02.2020 KR 20200012942
(71) Applicant: Samatti Co., Ltd., Seoul 06241 (KR)
(72) Inventor: LEE, Jong Hyuck, Seoul 05086 (KR)
(74) Representative: Kurig, Thomas
(86) International application number: PCT/KR2020/007439
(87) International publication number: WO 2020/251236

(57) **Abstract**

Disclosed are a method, a device, and a program for retrieving image data by using a deep learning algorithm. According to an embodiment of the inventive concept, a method of retrieving image data includes calculating, by a server, an individual appearance property for a plurality of appearance classification criteria by entering image data into an appearance property recognition model and generating, by the server, appearance description data by combining a plurality of individual appearance properties calculated for the image data. The appearance classification criteria are specific classification criteria for describing an appearance of a specific product and include a plurality of individual appearance properties that express various appearance properties in an identical classification criterion of the product.

## Description

### [TECHNICAL FIELD]

Embodiments of the inventive concept described herein relate to a method, device, and program for retrieving image data by using a deep learning algorithm.

### [BACKGROUND ART]

Nowadays, with the development of Internet, social media network services are rapidly growing. As a result, an effective image retrieval system is required as the amount of multimedia increases explosively. The importance of image annotation is increasing because there is a need for efficient image search according to the explosively increasing web image.

Most of the image retrieval studies have mainly conducted a content-based image retrieval (CBIR) method that analyzes content of an image. The CBIR method analyzes the content of an image by using visual features such as a color, a texture, and a shape. When the number of defined tags is small, the CBIR method works well. However, as sizes of datasets increase and types of tags become more diverse, the performance of the CBIR will decrease.

A text-based image retrieval (TBIR) method searches for an image corresponding to a text by using the text as a query. In the TBIR method, visual content of an image is represented by a manually-tagged text descriptor. The TBIR method is used to search for images in a database management system. That is, the conventional method for retrieving an image searches for images based on information directly tagged by a user. When the user incorrectly tags an image with a keyword, the found result may be inaccurate. Furthermore, there is a difference in a keyword defined for each user, and thus the result is changed depending on the keyword selected by the user that searches for an image.

### [DETAILED DESCRIPTION OF THE INVENTION]

### [TECHINICAL PROBLEM]

Embodiments of the inventive concept provide a method, device, and program for retrieving image data by using a deep learning algorithm that may accurately extract image data desired by a user based on an abstract term representing the appearance of a specific product.

Moreover, embodiments of the inventive concept provide a method, device, and program for retrieving image data by using a deep learning algorithm that may be transformed with training of adding minimal learning data in a situation where there is a need to transform an appearance property recognition model, such as a case that the definition of an abstract term is changed.

Problems to be solved by the inventive concept are not limited to the problems mentioned above, and other problems not mentioned will be clearly understood by those skilled in the art from the following description.

### [TECHNICAL SOLUTION]

According to an embodiment, a method of retrieving image data by using a deep learning algorithm includes calculating, by a server, an individual appearance property for a plurality of appearance classification criteria by entering image data into an appearance property recognition model and generating, by the server, appearance description data by combining a plurality of individual appearance properties calculated for the image data. The appearance classification criteria are specific classification criteria for describing an appearance of a specific product and include a plurality of individual appearance properties that express various appearance properties in an identical classification criterion of the product.

Furthermore, the appearance property recognition model may include a plurality of individual property recognition modules for determining different appearance classification criteria. The individual property recognition modules may calculate an individual appearance property included in a specific appearance classification criterion. The calculating of the individual appearance property may include calculating a plurality of individual appearance properties for the image data by entering the image data into each of the plurality of individual property recognition modules in the appearance property recognition model.

Moreover, the generating of the appearance description data may include extracting a plurality of code values respectively corresponding to the plurality of individual appearance properties and generating the appearance description data in a form of a code string by combining the plurality of code values.

Also, the method may further include, before the calculating of the individual appearance property, calculating, by the server, product type information by entering image data to a product type recognition model. The calculating of the individual appearance property may include calculating the plurality of individual appearance properties by entering the image data into a specialized appearance property recognition model corresponding to the calculated product type information. The specialized appearance property recognition model may be an appearance property recognition model including an individual property recognition module of a plurality of predetermined appearance classification criteria so as to be applied depending on specific product type information.

Besides, the method may further include, when it is impossible to calculate an individual appearance property for an appearance classification criterion of the specialized appearance property recognition model, calculating, by the server, product type information, which is different from product type information thus previously calculated, by entering the image data into the product type recognition model again.

In addition, the method may further include calculating, by the server, an abstract property based on the calculated plurality of individual appearance properties. The appearance description data may further include the abstract property calculated for the image data.

Furthermore, the calculating of the abstract property may include summing, by the server, a score for each abstract property based on a plurality of individual appearance properties calculated for the image data. A score for each of a plurality of abstract properties is set for each individual appearance property.

Moreover, the method may further include, as the server receives a search keyword from a specific user, extracting, by the server, image data corresponding to an appearance classification criterion combination matching an abstract property corresponding to the search keyword in a matching algorithm.

Also, when there is an unlearned appearance classification criterion in which an individual property recognition module is not built, the generating of the appearance description data may include generating the appearance description data by combining an input individual appearance property and a calculation individual appearance property. The input individual appearance property may be obtained from an image provider client or an expert client providing the image data with respect to the unlearned appearance classification criterion, and the calculation individual appearance property is calculated as the image data is entered into the individual property recognition module.

Besides, the method may further include, when a new appearance classification criterion for a specific product is added, obtaining, by the server, an individual appearance property of a new appearance classification criterion for learning-specific image data, and building a new learning dataset and training a new individual property recognition module based on the new learning dataset and adding the trained new individual property recognition module to the appearance property recognition model.

In addition, the method may further include adding, by the server, detailed information for a new appearance classification criterion by entering image data, from which the appearance description data is obtained by an already-built individual property recognition module, into a new individual property recognition module and updating, by the server, the matching algorithm by matching the individual appearance property of the new appearance classification criterion to each abstract property.

Furthermore, the method may further include, as the server receives an additional image data providing request from a user client, sequentially providing, by the server, image data having at least one different individual appearance property and, when a piece of image data or pieces of image data are selected from additional image data by a user, setting, by the server, a personalized abstract property based on appearance description data of the selected image data.

Moreover, the method may further include obtaining, by the server, reference image data from a user client, wherein the reference image data is a criterion for searching for an image having a similar appearance property in an identical product, calculating plurality of individual appearance properties for a plurality of appearance classification criteria by entering the reference image data into the appearance property recognition model, generating, by the server, appearance description data by combining the plurality of individual appearance properties for the reference image data, and extracting, by the server, image data including appearance description data identical to the reference image data.

According to an embodiment, an image data retrieval server device includes one or more computers and performs the above-described method.

According to an embodiment, an image data retrieval program is stored in a medium to be combined with a computer, which is hardware, and performs the above-described method.

Other details according to an embodiment of the inventive concept are included in the detailed description and drawings.

### [ ADVANTAGEOUS EFFECTS OF THE INVENTION]

According to an embodiment of the inventive concept, it is possible to automatically extract and provide image data matching the corresponding abstract property during retrieval by using an abstract property (e.g., an emotional term such as 'vintage' in fashion apparel) used to express an appearance of each product.

Moreover, according to an embodiment of the inventive concept, in the case where new input image data is obtained (e.g., a case that a new product is continuously added to a shopping mall page) when each individual property recognition module is learned, searches may be made based on an abstract property by generating appearance description data for each input image data without additional learning.

Also, according to an embodiment of the inventive concept, it is possible to minimize a situation in which the appearance property recognition model needs to be learned again or additionally learned. For example, searches may be made depending on the changed definition by modifying only an individual appearance property combination (i.e., appearance description information) matched to the abstract term (i.e., an abstract property) without the need to perform new learning when the definition of the appearance property of an abstract term is changed. That is, even when the definition of the abstract property is changed, there is no need to additionally learn an individual property recognition module. Moreover, for example, when a new appearance classification criterion for a specific product is added, the conventional individual property recognition module may be used as it is as long as only the new individual property recognition module is learned.

Furthermore, according to an embodiment of the inventive concept, the combination of appearance classification criteria applied depending on type information may be changed by calculating product type information of specific image data and entering the image data into the specialized appearance property recognition model corresponding to the calculated product type information. Accordingly, it is possible to efficiently obtain an individual appearance property.

Effects of the inventive concept are not limited to the effects mentioned above, and other effects not mentioned will be clearly understood by those skilled in the art from the following description.

### [ DESCRIPTION OF THE DRAWINGS]

FIG. 1 is a flowchart of an image data retrieval method, according to an embodiment of the inventive concept.
FIG. 2 is a block diagram of an appearance property recognition model, according to an embodiment of the inventive concept.
FIGS. 3 to 5 are flowcharts of an image data retrieval method further including a step of calculating product type information, according to an embodiment of the inventive concept.
FIG. 6 is an exemplary diagram for describing a code system, according to an embodiment of the inventive concept.
FIG. 7 is a flowchart of an image data retrieval method further including a step of calculating an abstract property, according to an embodiment of the inventive concept.
FIG. 8 is a block diagram of an abstract property recognition model, according to an embodiment of the inventive concept.
FIG. 9 is an exemplary diagram for describing setting of a first individual emotional property score for an individual appearance property, according to an embodiment of the inventive concept.
FIG. 10 is a flowchart of an image data retrieval method further including a step of extracting image data corresponding to a search keyword, according to an embodiment of the inventive concept.
FIG. 11 is a flowchart of an image data retrieval method further including a step of setting a personalization abstract property, according to an embodiment of the inventive concept.
FIG. 12 is a flowchart of an image data retrieval method further including a step of training a new individual property recognition module, according to an embodiment of the inventive concept.
FIG. 13 is a flowchart of an image data retrieval method by using reference image data, according to an embodiment of the inventive concept.
FIG. 14 is a flowchart of a method for building an appearance property recognition model learning-specific dataset, according to an embodiment of the inventive concept.
FIG. 15 is a block diagram of an image data retrieval server device, according to an embodiment of the inventive concept.

### [ BEST MODE]

Hereinafter, preferred embodiments of the inventive concept will be described in detail with reference to the accompanying drawings. The above and other aspects, features and advantages of the inventive concept will become apparent from the following description of the following embodiments given in conjunction with the accompanying drawings. However, the inventive concept is not limited to the embodiments disclosed below, but may be implemented in various forms. The embodiments of the inventive concept is provided to make the disclosure of the inventive concept complete and fully inform those skilled in the art to which the inventive concept pertains of the scope of the inventive concept. The same reference numerals denote the same elements throughout the specification.

Unless otherwise defined, all terms (including technical and scientific terms) used herein have the same meaning as commonly understood by those skilled in the art to which the inventive concept pertains. It will be further understood that terms, such as those defined in commonly used dictionaries, should be interpreted as having a meaning that is consistent with their meaning in the context of the specification and relevant art and should not be interpreted in an idealized or overly formal sense unless expressly so defined herein.

The terms used herein are provided to describe the embodiments but not to limit the inventive concept. In the specification, the singular forms include plural forms unless particularly mentioned. The terms "comprises" and/or "comprising" used herein do not exclude the presence or addition of one or more other components, in addition to the aforementioned components.

In this specification, a 'computer' includes all various devices capable of providing results to a user by performing arithmetic processing. For example, the computer may correspond to not only a desktop personal computer (PC) or a notebook but also a smart phone, a tablet PC, a cellular phone, a personal communication service (PCS) phone, a mobile terminal of a synchronous/asynchronous International Mobile Telecommunication-2000 (IMT-2000), a palm PC, a personal digital assistant (PDA), and the like. Besides, when a head-mounted display (HMD) device includes a computing function, the HMD device may be a computer. Furthermore, the computer may correspond to a server that receives a request from a client and processes information.

In this specification, a 'product' means an article of a specific classification or category. For example, in the case where a user searches for clothing among article categories when the user desires to search for an image of a desired article in a shopping mall, the product may be clothing.

In this specification, 'image data' means a two-dimensional or three-dimensional still image or video including a specific product. In other words, the 'image data' may be static image data having one frame, or may be dynamic image data (i.e., video data) in which a plurality of frames are continuous.

In this specification, an 'appearance classification criterion' refers to a classification criterion for appearance expression necessary for description or annotation of the appearance of a specific product. That is, the 'appearance classification criterion' is a specific classification criterion for describing the appearance of a specific product and includes a plurality of individual appearance properties representing various appearance properties within the same classification criterion of a product. For example, when the product is clothing, the appearance classification criterion is a classification criterion for the appearance of clothing, and may correspond to a pattern, a color, a fit, and a length. That is, when the number of appearance classification criteria for a specific product increases, an appearance of a specific article belonging to the product may be described in detail.

In this specification, the 'individual appearance property' means various properties included in a specific appearance classification criterion. For example, when the appearance classification criterion is a color, the individual appearance property means various individual colors.

In this specification, an 'abstract property' means an abstract property given to a specific product. For example, the 'abstract property' may be an emotional property (e.g., for clothing, emotional or fashionable expressions such as vintage) for a specific product. Also, for example, when the image data is a video, the 'abstract property' may mean a shape change or a shape operation.

Hereinafter, a detailed description of a method, device, and program for retrieving image data according to an embodiment of the inventive concept will be described with reference to the drawings.

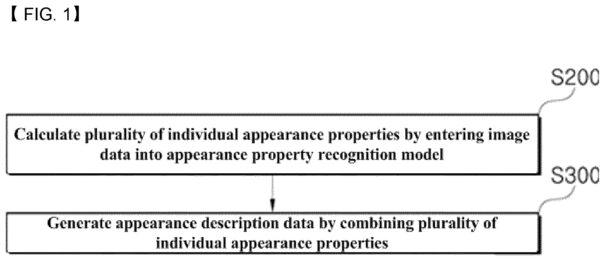

FIG. 1 is a flowchart of an image data retrieval method, according to an embodiment of the inventive concept.

Referring to FIG. 1, an image data retrieval method according to an embodiment of the inventive concept includes step S200 of calculating, by a server, an individual appearance property for a plurality of appearance classification criteria by entering image data into an appearance property recognition model and step S300 of generating, by the server, appearance description data by combining a plurality of individual appearance properties calculated for the image data. Hereinafter, the detailed description about each step is provided.

The server calculates an individual appearance property for a plurality of appearance classification criteria by entering the image data into the appearance property recognition model (S200).

The 'image data' means a two-dimensional or three-dimensional still image or video including a specific product. In other words, the 'image data' may be static image data having one frame, or may be dynamic image data (i.e., video data) in which a plurality of frames are continuous.

An 'appearance classification criterion' refers to a classification criterion for appearance expression necessary for description or annotation of the appearance of a specific product. That is, the 'appearance classification criteria' are specific classification criteria for describing an appearance of a specific product and includes a plurality of individual appearance properties that express various appearance properties in an identical classification criterion of the product. For example, when the product is clothing, the appearance classification criteria are classification criteria for the appearance of clothing, and may include a pattern, a color, a fit, a length, and the like. That is, when the number of appearance classification criteria for a specific product increases, an appearance of a specific article belonging to the product may be described in detail.

The individual appearance property means various properties included in the specific appearance classification criterion. For example, when the appearance classification criterion is a color, the individual appearance property means various individual colors.

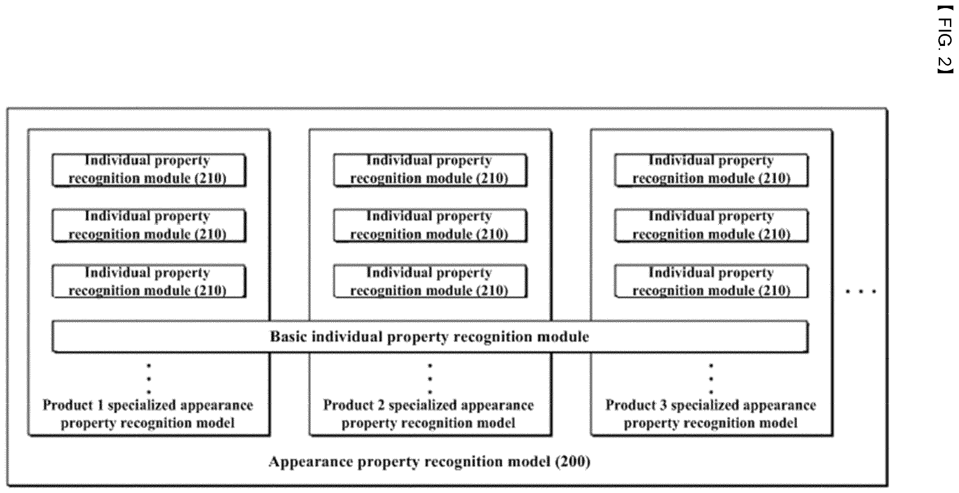

FIG. 2 is a block diagram of an appearance property recognition model, according to an embodiment of the inventive concept.

Referring to FIG. 2, in an embodiment, an appearance property recognition model 200 includes a plurality of individual property recognition modules 210 for determining different appearance classification criteria. That is, the appearance property recognition model 200 may include the plurality of individual property recognition modules 210 specialized as recognizing each appearance classification criterion. As the number of appearance classification criteria of a specific product increases, a server may include a plurality of individual property recognition modules in the appearance property recognition model 200.

Furthermore, in an embodiment, each of the individual property recognition modules 210 may be trained through a deep learning training model by matching the individual appearance property of the specific appearance classification criterion with pieces of learning image data. That is, the individual property recognition modules 210 may be built with a specific deep learning algorithm, and may perform learning by matching a specific one among a plurality of appearance classification criteria with learning-specific image data.

The deep learning is a machine learning technology that enables a computing system to perform human-like actions. In general, an artificial intelligence (AI) algorithm including the deep learning enters input data into an artificial neural network (ANN) and learns output data through an artificial operation such as convolution or the like.

The ANN may refer to a computational architecture obtained by modeling a biological brain. In the ANN, nodes corresponding to neurons in the brain are connected to each other and collectively operate to process the input data. For example, deep neural network (DNN), convolutional neural network (CNN), and recurrent neural network (RNN) are present as various types of ANNs, but is not limited thereto. The specific learning of the individual property recognition module 210 will be described later in detail.

In an embodiment, step S200 may include calculating a plurality of individual appearance properties for image data by entering the image data into each of the plurality of individual property recognition modules 210 in the appearance property recognition model 200. In this way, the server may obtain all individual appearance properties of each appearance classification criterion for the entered image data.

Next, the server generates appearance description data by combining a plurality of individual appearance properties calculated for the image data (S300). That is, when the appearance classification criterion for a specific product is divided in detail, the appearance description data may describe the appearance of the product in detail through various individual appearance properties.

As a specific example, when the individual appearance properties for a plurality of appearance classification criteria (a neckline, a sleeve, a top length, a color, and a pattern) calculated in step S200 are 'round neckline', 'short sleeve', 'crop', 'bright red' and 'polka dot' with respect to specific image data about a shirt, the appearance description data for the image data may be generated as "a round neckline, a short sleeve, a crop, a bright red, a polka dot".

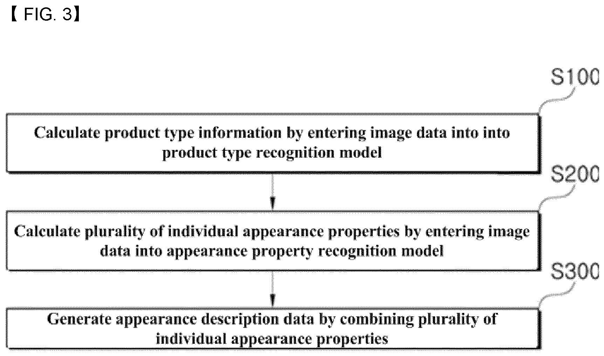

FIGS. 3 to 5 are flowcharts of an image data retrieval method further including a step of calculating product type information, according to an embodiment of the inventive concept.

Referring to FIG. 3, before step S200, an image data retrieval method according to an embodiment of the inventive concept may further include step S100 of calculating first product type information by entering image data into a product type recognition model.

The image data retrieval method may include calculating the first product type information by entering image data into a product type recognition model 100 (S100). That is, the image data retrieval method may include calculating product type information, which is a specific classification or category of a product included in image data.

In an embodiment, the product type recognition model 100 may be trained through machine learning or deep learning training model.

Besides, in an embodiment, the product type information may be calculated based on a predetermined product type classification. For example, when image data for clothing is entered in the case where an upper type classification is set to clothing, accessories, shoes, interior, or the like and a lower type classification for clothing in the upper type is set to seven items such as 'shirt&blouse', 'jacket', 'coat', 'pants', 'skirt', 'leggings&stockings' and 'one piece', the product type recognition model may calculate product type information among seven lower types for clothing.

Step S100 may include calculating not only single product type information but also pieces of product type information. That is, when it is difficult to calculate specific single product type information for the input image data, pieces of type information with high probability may be calculated.

In an embodiment, step S100 may include calculating type information indicating that a first probability is not less than a threshold value, by obtaining the first probability that a product of specific image data corresponds to respective specific type information.

As a specific example, when the threshold value of the first probability is 0.4, the first probability that the product of the entered image data corresponds to 'shirt&blouse' is 0.8, the first probability that the product of the entered image data corresponds to 'jacket' is 0.1, and the first probability that the product of the entered image data corresponds to 'coat' is 0.1, the product type recognition model may calculate 'shirt&blouse' as the product type information.

Furthermore, in an embodiment, when there are pieces of type information indicating that the first probability is not less than the threshold value, the product type recognition model may calculate pieces of type information as candidate type information.

As a specific example, likewise, when the threshold value is 0.4, the first probability that the product corresponds to 'shirt&blouse' is 0.5, the first probability that the product corresponds to 'jacket' is 0.4, and the first probability that the product corresponds to 'coat' is 0.1, 'shirt&blouse' and 'jacket' may be calculated as candidate type information. Settings of the final type information about candidate type information will be described later.

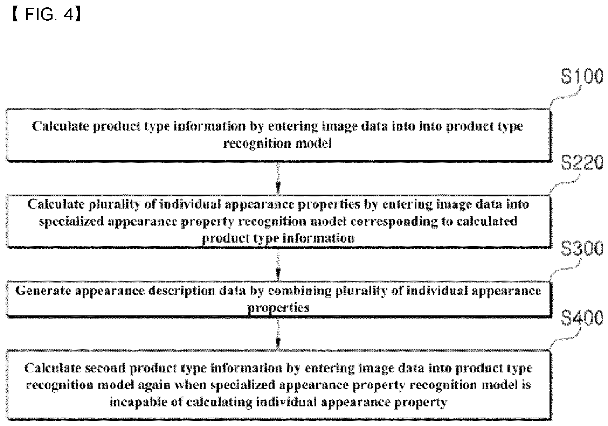

Referring to FIG. 4, step S200 of calculating a plurality of individual appearance properties may include calculating a plurality of individual appearance properties by entering image data into a specialized appearance property recognition model corresponding to the calculated product type information.

In an embodiment, the specialized appearance property recognition model includes an individual property recognition module of a plurality of predetermined appearance classification criteria so as to be applied depending on specific product type information. That is, the type of an appearance classification criterion applied depending on product type information calculated for specific image data may be determined.

In detail, referring to FIG. 2, the specialized appearance property recognition model for which a combination of different appearance classification criteria (i.e., a combination of individual property recognition modules) is set may be generated depending on specific product type information (product 1, product 2, or product 3). The individual appearance properties may be calculated by entering specific image data into each of a plurality of individual property recognition modules in the specialized appearance property recognition model corresponding to the calculated product type information. In the meantime, the combination of individual property recognition modules in the specialized appearance property recognition model of different product type information may be the same.

For example, when the specialized appearance property recognition model of 'jacket' type information includes 'neckline', 'sleeve', 'top length', and 'color' individual property recognition modules, and the specialized appearance property recognition model of 'pants' type information includes 'waist', 'bottom length', and 'color' individual property recognition modules, the specialized appearance property recognition model (i.e., the combination of the applied appearance classification criteria) into which the image data is entered may be different depending on product type information (jacket/pants) of image data entered into the appearance property recognition model.

Furthermore, in an embodiment, as illustrated in FIG. 2, each specialized appearance property recognition model for pieces of product type information may share and uses a basic individual property recognition module. The basic individual property recognition module means an individual property recognition module for the basic appearance classification criterion capable of being applied regardless of a product type.

For example, the appearance classification criterion of 'color', 'pattern', or 'texture' may be applied (calculating an individual appearance property) regardless of a product type, and thus the appearance classification criterion may correspond to a basic appearance classification criterion.

Also, according to the above-described embodiment, when pieces of candidate type information are calculated in step S100, the image data may be entered into all the specialized appearance property recognition models corresponding to the candidate type information. The final type information setting performed based on the above-described method will be described later.

For example, when 'jacket' and 'pants' are calculated as candidate type information for specific image data, an individual appearance property may be calculated by entering the image data into the 'jacket' specialized appearance property recognition model and the 'pants' specialized appearance property recognition model.

Referring to FIG. 4, when it is impossible to calculate an individual appearance property for the appearance classification criterion of the specialized appearance property recognition model, the image data retrieval method according to an embodiment of the inventive concept may further include step S400 of calculating second product type information by entering image data into a product type recognition model again.

In an embodiment, the second product type information may be different from the previously-calculated first product type information.

That is, as described above, the combination of appearance classification criteria to be applied depending on the calculated product type information may be different. When an error occurs by a specific ratio or more with respect to the specialized appearance property recognition model of the calculated type information (e.g., when the number of individual property recognition modules incapable of calculating an individual appearance property is not less than a predetermined threshold value), the server determines that the calculation of product type information is wrong, enters the image data into the product type recognition model again, and calculates new type information again.

For example, the server incorrectly calculates product type information as 'jacket' with respect to image data about 'pants' in step S100, and then enters the image data into an individual property recognition module of the 'jacket' specialized appearance property recognition model (e.g., including 'neckline', 'sleeve length', 'top length', and 'color' individual property recognition modules) in step S220. However, when it is impossible to calculate individual appearance properties for a neckline, a sleeve, and a top length, the server determines that the calculation of product type information is wrong, enters the image data into the product type recognition model again, and calculates new type information (e.g., 'pants') again.

In addition, according to the above-described embodiment, when pieces of candidate type information are calculated in step S100 and the image data is entered into the individual property recognition module of the specialized appearance property recognition model corresponding to each of the candidate type information, candidate type information with the fewest appearance classification criteria in which individual appearance properties are not calculated may be set as final type information.

That is, as in the above-described embodiment, when pieces of candidate type information with high probability are calculated because it is difficult to calculate specific single product type information with respect to the entered image data and the image data is entered into the specialized appearance property recognition model of each candidate type information, candidate type information with a high recognition rate (the number of individual property recognition modules incapable of calculating individual appearance properties is small) may be set as the final type information.

For example, when pieces of candidate type information of 'jacket' and 'pants' are calculated in step S100 with respect to image data about 'jacket', and the corresponding image data is entered into the 'jacket' specialized appearance property recognition model and the 'pants' specialized appearance property recognition model in step S220, the recognition rate of each specialized appearance property recognition model may be higher in 'jacket' than in 'pants' (because the number of individual property recognition modules incapable of calculating individual appearance properties may be greater in 'pants' specialized appearance property recognition model) unless otherwise specified, and thus 'jacket' may be set as the final type information.

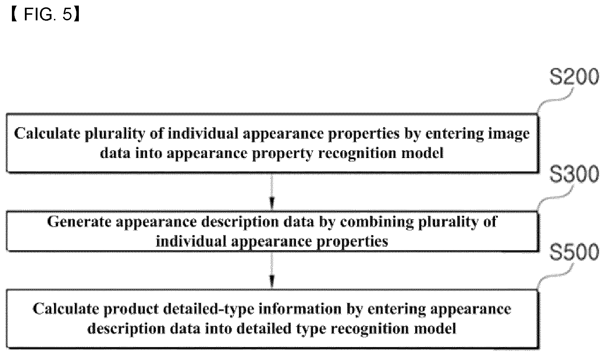

Besides, referring to FIG. 5, the image data retrieval method according to an embodiment of the inventive concept may further include step S500 of calculating, by the server, product detailed-type information by entering appearance description data of image data into detailed type recognition model.

In an embodiment, the product detailed-type information may be a sub-concept of the product type information calculated in step S100. For example, when 'pants' product type information is calculated in step S100 with respect to specific image data, the detailed-type information may be 'skinny pants', 'slacks pants', 'baggy pants', or the like.

When appearance description data (product type information or an individual appearance property) generated for specific image data is entered, a detailed-type recognition model 400 may be a model for calculating product detailed-type information of input image data. In addition, the detailed-type recognition model may be trained through machine learning or deep learning training model.

In an embodiment, as a piece of detailed-type information or pieces of detailed-type information are matched to each of one or more individual appearance property combinations, the detailed-type recognition model may calculate detailed-type information about a combination of individual appearance properties of the input appearance description data. Moreover, in an embodiment, it is also possible to calculate pieces of detailed-type information.

For example, detailed-type information (a sub-concept is a2 when product type information is A, a sub-concept is b1 when product type information is B, or the like) is matched for specific individual appearance property combinations (a, b, c). The corresponding detailed-type information (b1) may be calculated depending on the entered appearance description data (product type information B or individual appearance properties a, b, and c).

Moreover, in an embodiment, when detailed-type information is calculated, the appearance description data may further include product detailed-type information. That is, in an embodiment, the existing appearance description data may be added by extracting a code value corresponding to the calculated detailed-type information.

In an embodiment, step S300 may include generating appearance description data by combining product type information calculated for the image data and a plurality of individual appearance properties. That is, the appearance description data may be generated by further including the plurality of individual appearance properties as well as the product type information.

Moreover, in an embodiment, although not illustrated in the drawings, step S300 may include extracting a plurality of code values respectively corresponding to the plurality of individual appearance properties for image data and generating appearance description data in a form of a code string by combining the extracted plurality of code values. That is, as the server converts an individual appearance property into a code, the server may generate appearance description data as a code string. In this way, the appearance description data may be efficiently processed.

As a specific example, when the code values corresponding to product type information (Shirt&blouse) and a plurality of individual appearance properties (a round neckline, a short sleeve, a crop, a bright red, and a polka dot) are 'Zb01', 'Bb01', 'Bg03', Bi01', 'Oa01', and 'Id00', respectively, appearance description data for the image data may be generated as "Bb01, Bg03, Bi01, Id00, Oa01, and Zb01" obtained by combining the code values.

Furthermore, the structure of a code system of appearance description data according to an embodiment of the inventive concept may be variously built depending on each product type classification criterion, each appearance classification criterion, and each abstract property classification criterion.

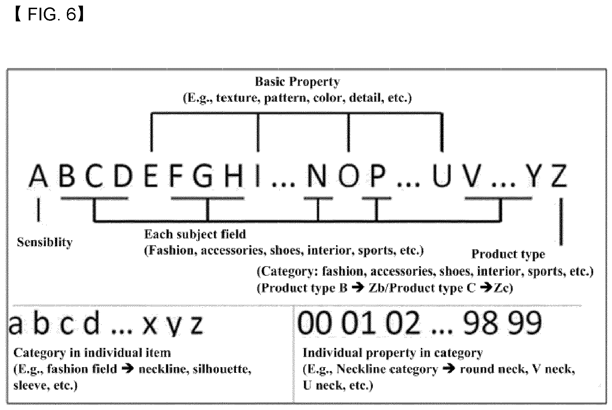

For example, the code system according to an embodiment of the inventive concept may be built as shown in FIG. 6. Referring to FIG. 6, an uppercase letter may mean information about a higher category. That is, a code corresponding to product type information may include 'Z'; a code corresponding to the abstract property may include 'A'; and, codes corresponding to a plurality of appearance classification criteria may include "B to Y".

Also, for code 'Z' corresponding to product type information, a lowercase letter "a to y" may be assigned depending on an upper type (e.g., fashion (clothing), accessories, shoes, interior, or the like), and numbers "00 to 99" may be assigned depending on each product type information corresponding to the lower type. For example, Zb may indicate 'fashion (clothing)'; Zc may indicate 'accessories'; Zb01 may indicate 'shirt&blouse'; and, Zb02 may be a code value corresponding to product type information of 'jacket'.

In addition, codes corresponding to a plurality of appearance classification criteria may be divided into "B to Y"; basic appearance classification criteria capable of being applied regardless of a product type may be divided into "E, I, O, and U"; and, specialized appearance classification criteria applied to a specific product type may be classified into "B, C, D, or the like". Codes of the specialized appearance classification criteria may correspond to the above-described upper type codes "Za, Zb, Zc, and the like".

For example, a plurality of specialized appearance classification criteria for 'clothing' may include 'B'; the lowercase letters "a to y" are assigned depending on each appearance classification criterion; and, the numbers "00 to 99" may be assigned depending on the individual appearance property for the corresponding appearance classification criterion. In detail, Ba may mean an appearance classification criterion of 'top silhouette'. Bb may mean an appearance classification criterion of 'neckline'. Bi may mean the appearance classification criterion of 'pants silhouette'. Bb01 may correspond to 'round neckline'. Bb02 may correspond to 'V neckline'. Each of Bb01 and Bb02 may be a code value corresponding to each individual appearance property for an appearance classification criterion of neckline (Bb). Examples of code values corresponding to abstract properties will be described later.

As described above, an example of a code system structure according to an embodiment of the inventive concept is described with reference to FIG. 6. However, the code system according to an embodiment of the inventive concept is not limited thereto and may be built in various manners.

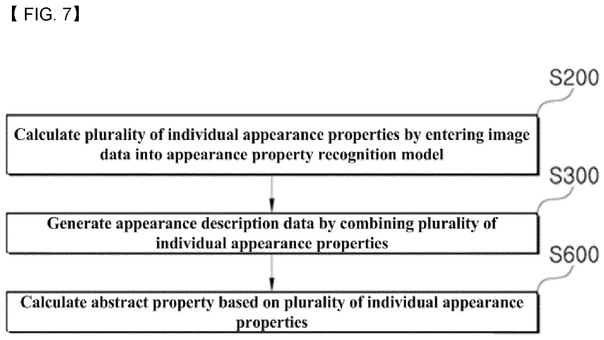

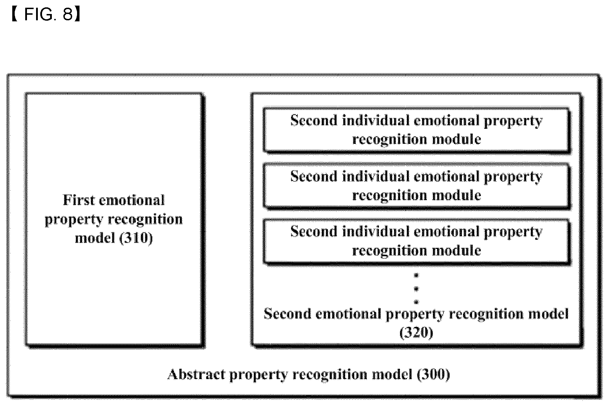

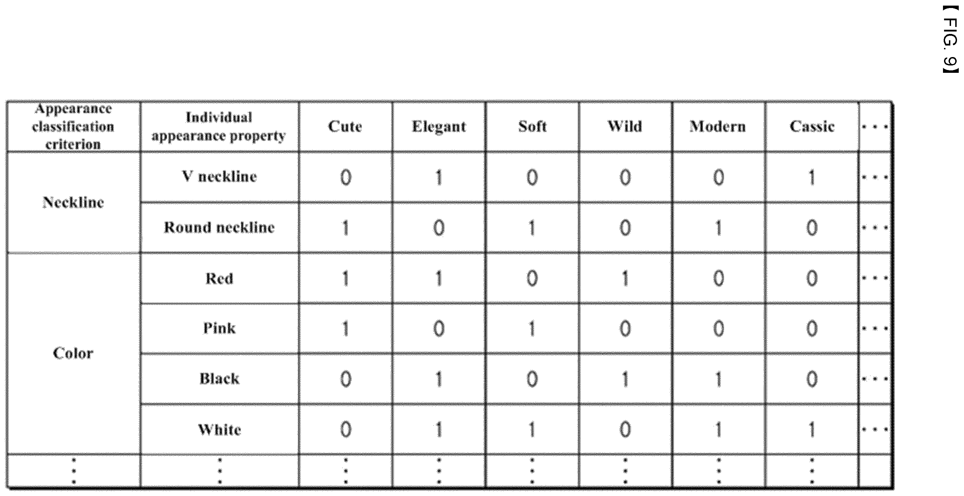

FIG. 7 is a flowchart of an image data retrieval method further including a step of calculating an abstract property, according to an embodiment of the inventive concept. FIG. 8 is a block diagram of an abstract property recognition model, according to an embodiment of the inventive concept. FIG. 9 is an exemplary diagram for describing setting of a first individual emotional property score for an individual appearance property, according to an embodiment of the inventive concept. Hereinafter, an abstract property calculating method according to an embodiment of the inventive concept will be described with reference to FIGS. 7 to 9.

Referring to FIG. 7, an image data retrieval method according to an embodiment of the inventive concept may further include calculating, by a server, an abstract property based on a plurality of individual appearance properties thus calculated (S600).

In an embodiment, step S600 may include calculating, by the server, the abstract property by entering appearance description data of image data into an abstract property recognition model 300. Furthermore, the abstract property recognition model 300 may be trained through machine learning or deep learning training model.

That is, according to an embodiment of the inventive concept, as the abstract property is calculated based on the appearance description data (product type information and an individual appearance property) calculated from the image data, not the image data such as an image, it is possible to efficiently process data and to calculate objective abstract property.

Moreover, in an embodiment, the image data retrieval method may further include, when the abstract property is calculated by entering appearance description data, in which product type information and an individual appearance property are combined, into the abstract property recognition model, updating the appearance description data by adding the calculated abstract property to the previously-generated appearance description data.

In an embodiment, the abstract property may include a first emotional property. The first emotional property is an emotional property perceived based on the appearance of a specific product and includes a plurality of first individual emotional properties that are specific emotional properties.

In an embodiment, the definition and number of first individual emotional properties included in the first emotional property may be set by the server, and may be added or changed. The first emotional property that is an emotional property for the appearance of a product may be defined differently depending on an era or region, and thus may be variously changed depending on the era or region.

For example, each of the first individual emotional properties may be set to 'cute', 'soft', 'modern', or the like. Besides, each of the first individual emotional properties may be set to further include 'elegant', 'wild', 'classic', or the like, which are the first individual emotional properties, in contrast to each of the first individual emotional properties. However, the first individual emotional properties according to an embodiment of the inventive concept are not limited thereto and may be set in various manners.

Referring to FIG. 8, in an embodiment, the abstract property recognition model 300 includes a first emotional property recognition model 310 that receives individual appearance properties and calculates first emotional properties.

In an embodiment, as a score is set for each of a plurality of first individual emotional properties for each individual appearance property, the first emotional property recognition model may calculate a first emotional property by summing scores for the first individual emotional properties set in the plurality of individual appearance properties thus entered.

For example, as illustrated in FIG. 9, a score may be set for each of the first individual emotional properties for each of the plurality of individual appearance properties included in each appearance classification criterion. In FIG. 9, each score is displayed as 0 or 1, but is not limited thereto. For example, the score may be set in various manners such as a number between 0 and 1 or a negative number.

In an embodiment, for a score table in which a score for each individual appearance property is set for each individual appearance property, not only one score table but also a plurality of different score tables may be generated. For example, the score table may be different for each country or region. The personalized score table for each user may be generated. It is obvious that the score table is capable of being freely changed by the server.

Next, the first emotional property may be calculated by summing first individual emotional property scores based on the plurality of individual appearance properties thus entered and each first individual emotional property score set for the individual appearance property.

For example, in the example of FIG. 9, when the individual appearance properties of 'V neckline' and 'red' calculated from specific image data are entered, the summed score for each first individual emotional property is cute: 1', elegant: 2', 'soft: 0', 'wild: 1', modern: 0', and 'classic: 1', and the first emotional property may be calculated based on the summed score.

In an embodiment, the first emotional property may be calculated by including a ratio of each first individual emotional property score to the total score. For example, for above-described example, because the total score is 5, the first emotional property may be calculated as "cute: 0.2, elegant: 0.4, soft: 0, wild: 0.2, modern: 0, classic: 0.2" so as to include a ratio of the first individual emotional property scores.

In another embodiment, the first emotional property may be calculated by including each first individual emotional property score. For example, for above-described example, the first emotional property may be calculated as "cute: 1, elegant: 2, soft: 0, wild: 1, modern: 0, classic: 1" so as to include each first individual emotional property score.

In another embodiment, the first emotional property may be used to calculate only the first individual emotional property indicating that each first individual emotional property score is not less than a predetermined threshold value. For example, in the above example, when the threshold value is 2 (or when a ratio is 0.4), the first emotional property may be calculated as only the first individual emotional property of 'elegant'. However, the calculation of the first emotional property is not limited to the above examples and may be calculated in various manners.

Moreover, in an embodiment, a code value corresponding to the first emotional property may include information about the summed score for each of the first individual emotional properties.

In detail, in the above example, when the first emotional property is calculated as "cute: 0.2, elegant: 0.4, soft: 0, wild: 0.2, modern: 0, classic: 0.2", and a code value corresponding to each first individual emotional property is "cute: Aa, elegant: Ac, soft: Ad, wild: Af, modern: Ai, classic: Ap", appearance description data in a form of a code string for the first emotional property may be generated as "Aa20, Ac40, Ad00, Af20, Ai00, and Ap20". Furthermore, when code values corresponding to 'red' and 'V neckline' that are individual appearance properties are 'Oa02' and 'Bb02', the appearance description data of the image data may be generated as "Aa20, Ac40, Ad00, Af20, Ai00, Ap20, Bb02, and Oa02", which are obtained by combining the code values. However, as described above, the code system according to an embodiment of the inventive concept is not limited thereto and may be built in various manners.

In an embodiment, the abstract property may include a second emotional property. The second emotional property may be an emotional property perceived based on information given to the merchandise of a specific product and may include second individual emotional properties, which are various emotional properties that are perceived for different types of merchandise information.

For example, the second individual emotional properties of 'cheap' and 'expensive' that are perceived for merchandise information of 'price', or the second individual emotional properties of 'fast' and 'slow' that are perceived for merchandise information of 'delivery time' may be included.

Referring to FIG. 8, in an embodiment, the abstract property recognition model 300 may include a second emotional property recognition model 320 that receives merchandise information about a product of image data and then calculates a second emotional property.

Moreover, in an embodiment, the second emotional property recognition model 320 may include a plurality of second individual emotional property recognition modules for determining emotional properties for different merchandise information. The second individual emotional property recognition module calculates each second individual emotional property for specific merchandise information of a product in image data.

Moreover, in an embodiment, the second emotional property may be calculated in consideration of not only merchandise information but also various pieces of information such as individual appearance property, product type information, or user information.

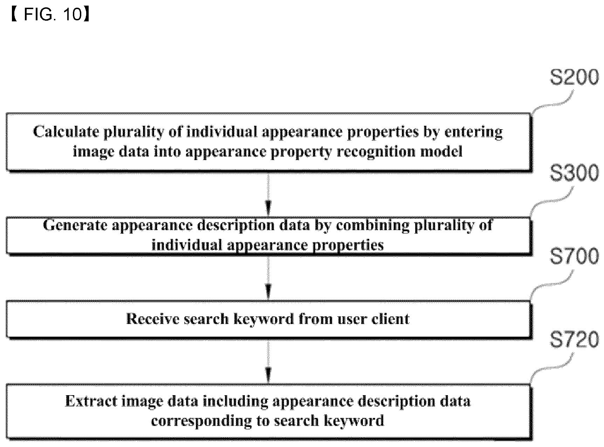

FIG. 10 is a flowchart of an image data retrieval method further including a step of extracting image data corresponding to a search keyword, according to an embodiment of the inventive concept.

Referring to FIG. 10, an image data retrieval method according to an embodiment of the inventive concept may further include step S700 of receiving, by a server, a search keyword from a user client and step S720 of extracting, by the server, image data including appearance description data corresponding to the search keyword.

That is, when a user enters a specific search keyword to search for the image data, the server may extract product type information, individual appearance property, or abstract property corresponding to the search keyword and then may provide the user with the extracted type information, individual appearance property, or image data including appearance description data of the abstract property as the found result.

For example, when the user enters 'cute red round T-shirt' as the search keyword, the server may extract 'shirt&blouse' as product type information from the search keyword, may extract 'red', 'round neckline', and 'no collar' as individual appearance properties, and may extract 'cute' as an abstract property. The server may provide the user with the image data including appearance description data of "red, round neckline, no color, and cute" to the user.

Moreover, in an embodiment, when extracting the image data corresponding to the search keyword, the server may extract the image data further in consideration of preference information about each of the user's individual appearance property, first individual emotional property, or second individual emotional property. In this case, even though the same search keyword is entered, the found result may be changed depending on a user who enters the search keyword.

In the meantime, for an embodiment that does not include step S600 of calculating an abstract property based on an individual appearance property, step S720 may include extracting the appearance classification criterion combination matched to an abstract property corresponding to the entered search keyword from a matching algorithm and extracting image data corresponding to the extracted appearance classification criterion combination. In other words, when a user desires to search for desired image data based on a search keyword, which is one of the abstract properties of a specific product, or a search keyword determined to be a keyword similar to the abstract property, the server may extract an appearance classification criterion combination matched to the abstract property corresponding to the search keyword in the matching algorithm and then may extract image data having the corresponding appearance classification criterion combination in the appearance description data.

In an embodiment, in the matching algorithm, a plurality of individual appearance properties may be matched to abstract properties, respectively. Also, when the specific appearance classification criterion is not taken into account to define a specific abstract property, the server may not match the specific appearance classification criterion to the corresponding abstract property. For example, when there is no need to consider appearance classification criterion 1 in defining abstract property X, (i.e., when a product to which all individual appearance properties of appearance classification criterion 1 are applied may be included in abstract property X), the server may not match appearance classification criterion 1 to abstract property X. Furthermore, the server may match a plurality of individual appearance properties of appearance classification criterion 2 to abstract property X.

Moreover, in an embodiment, the matching algorithm may be set as the server receives setting data for matching the abstract property to an appearance classification criterion combination from an expert client. The definition of abstract property may be changed or different due to factors such as regional differences, a change of era, establishment of new definitions, and the like. For example, when a product is fashion clothing or fashion miscellaneous goods, the abstract properties indicating specific fashion trends or emotional properties may be changed depending on a change of era and may be defined differently depending on regions around the world (e.g., an abstract property called 'vintage' (i.e., an emotional property) is capable being defined as having different appearances in the past and present). Accordingly, the server may add or change the matching relationship between the abstract property and individual appearance property combination in the matching algorithm.

As a specific example, when the definition for a specific abstract property is changed, the server may receive the appearance classification criterion combination for the current abstract property from an expert client. At this time, the server may set the combination of an abstract property and an appearance classification criterion before change as the definition of the corresponding abstract property at a specific point in the past. In this way, the server may accumulate the definition or description information of a specific abstract property according to a change of era.

As another specific example, as the same abstract property needs to be defined with different appearances for each region, the expert client may set an appearance classification criterion combination for each region and the server may store the appearance classification criterion combination for each region.

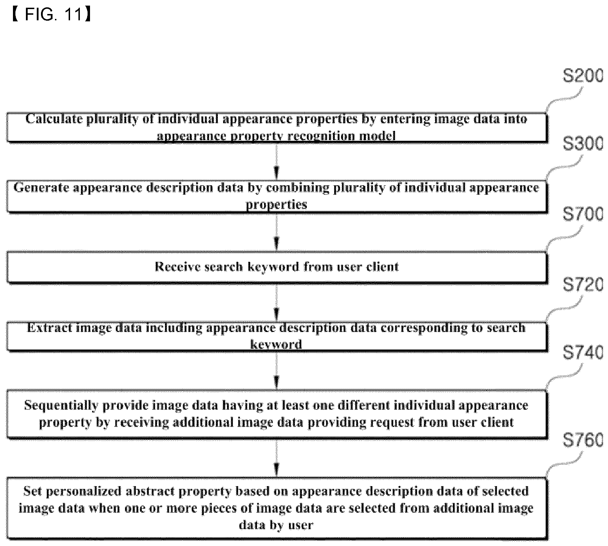

FIG. 11 is a flowchart of an image data retrieval method further including a step of setting a personalization abstract property, according to an embodiment of the inventive concept.

Referring to FIG. 11, an image data retrieval method according to an embodiment of the inventive concept may further include step S740 of sequentially providing, by the server, image data having at least one different individual appearance property as a server receives an additional image data providing request from the user client and step S760 of setting, by the server, a personalized abstract property based on appearance description data of the selected image data when a piece of image data or pieces of image data are selected from the additional image data by the user.

That is, while performing a search based on a search keyword, the server may expand a search range while changing at least one appearance classification criterion into another individual appearance property in the description information of the abstract property corresponding to the search keyword, and then may provide additional image data to a user client. Afterward, the user may select one or more desired images within an extended search range in the server. Afterward, the server may personalize the search keyword or abstract property entered by the user based on the selected images. For example, the appearance definition of the general abstract property may be different from the appearance definition of the abstract property that the user thinks. Accordingly, the server sets the description information or appearance definition (i.e., description information of the personalized abstract property) of the abstract property, which the user thinks, based on the appearance description data of the image selected by the user in the expanded search result. In this way, when the user performs a search by using the same search keyword or abstract property in the future, the server may first provide an image desired by the user by performing a search based on description information of the personalized abstract property without performing a search based on description information of the general abstract property.

In an embodiment, although not shown in the drawing, the image data retrieval method may further include providing, by the server, an abstract property suitable for extracting the selected image data to the user client, when there is an abstract property corresponding to appearance description data of the selected image data. That is, the server may provide a notification that the appearance definition known to the user is different from the generally-used appearance definition for a specific abstract property, the server may extract and provide an abstract property (or a search keyword) that matches the appearance definition that the actual user thinks. In this way, when the user performs a search again in the future, it is possible to allow the user to recognize the search keyword capable of obtaining the desired search result.

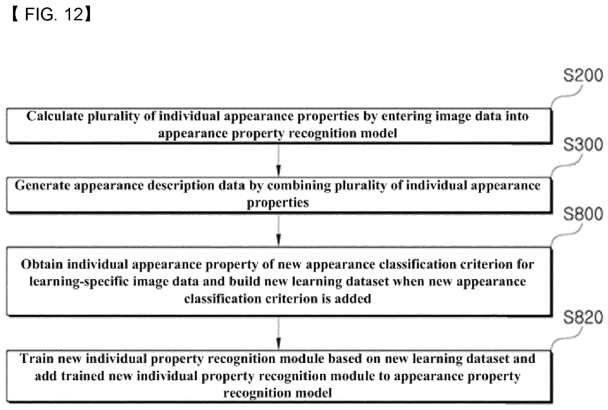

FIG. 12 is a flowchart of an image data retrieval method further including a step of training a new individual property recognition module, according to an embodiment of the inventive concept.

Referring to FIG. 12, an image data retrieval method according to an embodiment of the inventive concept may further include step S800 of obtaining, by a server, an individual appearance property of a new appearance classification criterion for learning-specific image data and building a new learning dataset when the new appearance classification criterion is added, and a step S820 of training, by the server, a new individual property recognition module based on the new learning dataset and adding the trained new individual property recognition module to an appearance property recognition model.

In other words, when a new appearance classification criterion for a specific product is added (e.g., when a new criterion for dividing an appearance property of clothing is added), the server may additionally build only the individual property recognition module for the new appearance classification criterion without changing the existing individual property recognition module, and then may change the appearance property recognition model depending on a situation where a new appearance classification criterion is added.

First of all, the server obtains the individual appearance property of the new appearance classification criterion for the learning-specific image data, and builds a new learning dataset (S800).

In an embodiment, when building a new individual property recognition module by using the same image data used to train another individual property recognition module, the server may receive the individual appearance property of the new appearance classification criterion for each learning-specific image data from an expert client.

In another embodiment, the server may obtain new image data for training the individual property recognition module for the new appearance classification criterion and then may build a new learning dataset by receiving each individual appearance property of the new appearance classification criterion with respect to the new image data.

Afterward, the server trains a new individual property recognition module based on the new learning dataset, and adds the trained new individual property recognition module to the appearance property recognition model (S820). In this way, the server may add a new individual property recognition module together with a plurality of existing individual property recognition modules to a plurality of appearance property recognition models.

In an embodiment, although not shown in drawings, the image data retrieval method may further include a step of adding, by the server, an individual appearance property for a new appearance classification criterion by entering image data, from which appearance description data has been obtained by the already-built individual property recognition module, into the new individual property recognition module. That is, the server may perform a process of updating appearance description data of the previously-obtained input image data so as to reflect the new appearance classification criterion. To this end, the server may perform a process of calculating individual appearance properties by inserting all pieces of image data into the new individual property recognition module.

In another embodiment, although not shown in drawings, the image data retrieval method may further include a step of updating, by the server, an abstract property recognition model by adding an individual appearance property of a new appearance classification criterion to the abstract property recognition model.

In still another embodiment, although not shown in drawings, the image data retrieval method may further include a step of updating, by the server, a matching algorithm by matching the individual appearance property of the new appearance classification criterion to each abstract property in the matching algorithm. That is, when the user searches for image data based on a keyword corresponding to an abstract property, the server may connect the individual appearance property of a new appearance classification criterion to each abstract property in the matching algorithm to provide optimal search results by reflecting the new appearance classification criterion.

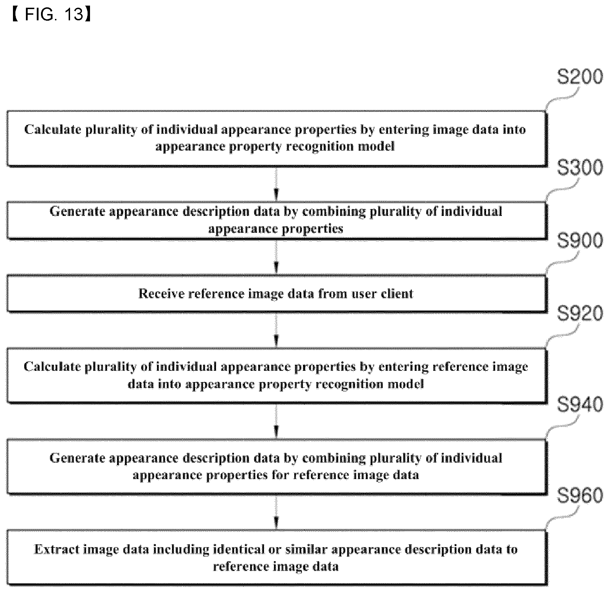

FIG. 13 is a flowchart of an image data retrieval method by using reference image data, according to an embodiment of the inventive concept.

Referring to FIG. 13, an image data retrieval method according to an embodiment of the inventive concept may further include step S900 of receiving, by a server, reference image data from a user client, step S920 of calculating, by the server, a plurality of individual appearance properties for a plurality of appearance classification criteria by entering the reference image data into the appearance property recognition model, step S940 of generating, by the server, appearance description data by combining a plurality of individual appearance properties for the reference image data, and step S960 of extracting, by the server, image data including identical or similar appearance description data to the reference image data.

That is, when the user performs a search based on a specific product image (i.e., reference image data) that the user has, instead of performing a search based on a keyword corresponding to an abstract property, the server may generate appearance description data for reference image data, may extract image data including identical or similar appearance description data, and may provide the image data to a user client.

First of all, the server receives reference image data from a user client (S900). That is, the server receives the reference image data, which is stored in the user client or found online by the user.

Afterward, the server calculates an individual appearance property included in each appearance classification criterion by entering the received reference image data into the appearance property recognition model (S920). That is, the server obtains a plurality of individual appearance properties for describing the reference image data appearance property as text information through each individual property recognition module.

Afterward, the server generates appearance description data by combining a plurality of individual appearance properties with respect to the reference image data (S940).

Afterward, the server extracts image data including the same appearance description data as the reference image data.

In an embodiment, when searching for image data including the same appearance description data as the reference image data, the server may retrieve and provide input image data having the same appearance description data as the reference image data.

In another embodiment, when searching image data to a range similar to the reference image data, the server may extend from a low importance to the similar range among a plurality of appearance classification criteria included in the appearance description data of the reference image data, and then may extract image data including a piece of extended appearance description data or pieces of extended appearance description data. To this end, the server may include a priority ranking for a plurality of appearance classification criteria of a specific product (e.g., as the priority ranking is higher, a fixed value is maintained when the search range is extended to the similar range), and may include similarity between individual appearance properties within a specific appearance classification criterion.

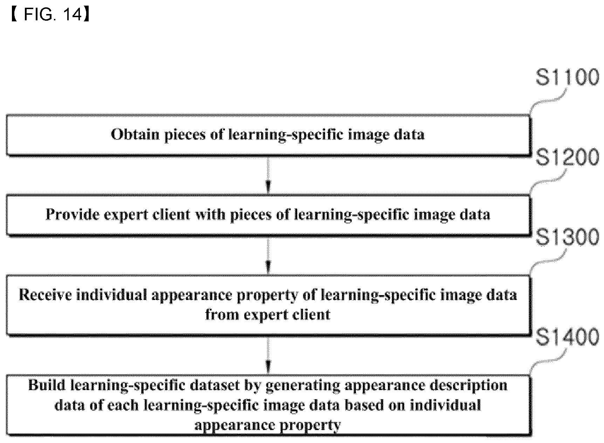

FIG. 14 is a flowchart of a method for building an appearance property recognition model learning-specific dataset, according to an embodiment of the inventive concept. Hereinafter, a method of building an appearance property recognition model learning-specific dataset according to an embodiment of the inventive concept will be described with reference to FIG. 14.

Referring to FIG. 14, a method for building an appearance property recognition model learning-specific dataset according to an embodiment of the inventive concept includes step S1100 of obtaining, by a server, pieces of learning-specific image data, step S1200 of providing, by the server, an expert client with the pieces of learning-specific image data, step S1300 of receiving, by the server, a plurality of individual appearance properties for a plurality of appearance classification criteria of each learning-specific image data from the expert client, and step S1400 of building, by the server, a learning-specific dataset by generating appearance description data for each learning-specific image data based on the received plurality of individual appearance properties. Hereinafter, a detailed description of each step will be described.

The server obtains the pieces of learning-specific image data (S1100). The learning-specific image data means image data for learning the appearance property recognition model. In an embodiment, the learning-specific image data may be image data of a product including a design article.

In an embodiment, the appearance classification criterion and a plurality of individual appearance properties for each appearance classification criterion may be set by the server. That is, the server may set an appearance classification criterion, which is a criterion for determining the appearance property of image data, and an individual appearance property, which is a feature type for labeling learning-specific image data for each appearance classification criterion.

As a specific example, an expert client for the appearance analysis of a specific product may set a plurality of appearance classification criteria for analyzing the specific product appearance and a plurality of individual appearance properties within each appearance classification criterion in the server. For example, when building the appearance property recognition model 200 for clothing, the server may receive and set an appropriate appearance classification criterion and individual appearance properties included in the appropriate appearance classification criterion from a designer's client who is a clothing expert and then may build the appearance property recognition model 200 for clothing including the individual property recognition module 210 for each appearance classification criterion and the plurality of individual property recognition modules 210.

In an embodiment, the obtaining of the learning-specific image data includes obtaining, by the server, the learning-specific image data from an image provider client. As a specific example, when an image of a sale article is uploaded onto the server in a shopping mall, the image provider client may be a client of a person who uploads an image onto the shopping mall, and an image of a sale article may be learning-specific image data.

Next, the server provides the pieces of learning-specific image data to the expert client (S1200). The expert client means a client of an expert who assigns and classifies each appearance classification criterion.

In an embodiment, the individual appearance property according to a specific appearance classification criterion of the pieces of learning-specific image data may be obtained by the same expert.

As a specific example, the obtaining of the individual appearance properties of the pieces of learning-specific image data for the 'color' appearance classification criterion may be performed by an expert in charge of 'color'. Because the determining of some appearance classification criteria may be somewhat subjective, it is possible to build a learning-specific dataset with a unified criterion by allowing the same expert to determine a specific appearance classification criterion for pieces of learning-specific image data. Accordingly, it is possible to accurately train the appearance property recognition model.

In an embodiment, as described above, the appearance classification criterion may include a specialized appearance classification criterion applied to only the product having a specific type and a basic appearance classification criterion applied to products having all types. For example, an appearance classification criterion such as 'color' or 'texture' may be applied (calculation of an individual appearance property) to all products regardless of a product type, and thus is a basic appearance classification criterion. In contrast, the 'neckline' appearance classification criterion may be applied to only the 'a top of clothing' type product, and thus may be a specialized appearance classification criterion for a 'top'.

In an embodiment, step S1200 may include providing all expert clients with all learning-specific image data obtained by the server. That is, it is possible to provide the entire learning-specific image data obtained regardless of the product type to the expert client in charge of the specific appearance classification criterion.

In this case, the expert client who is in charge of the specialized appearance classification criterion that is not applied to the specific product type may provide the server with the corresponding information. For example, when the learning-specific image data for a product having pants, skirt' type is provided to the expert client in charge of the 'neckline' appearance classification criterion, information about "it is impossible to apply the corresponding appearance classification criterion (it is impossible to determine an individual appearance property)" may be provided to the server.

In another embodiment, although not shown in drawings, the image data retrieval method may further include a step of obtaining, by the server, product type information of the obtained learning-specific image data. Step S1200 may include providing, by the server, all the obtained learning-specific image data to the client of the expert who assigns and classifies the basic appearance classification criterion. Only the learning-specific image data of the type of a product to which the specialized appearance classification criterion is applied is provided to a client of the expert who assigns and classifies the specialized appearance classification criterion.

The server may obtain product type information of learning-specific image data. The obtaining of the product type information may include obtaining, by the server, the product type information from an expert client in charge of type classification or through a separate product type recognition model. That is, the type classification criterion for classifying the type of a product may be a classification criterion belonging to a sub-concept of the appearance classification criterion. On the other hand, the type classification criterion for classifying the type of a product may be a separate classification criterion independent of the appearance classification criterion.

In an embodiment, the obtained product type information may be in a form of a code string corresponding thereto. For example, the code string corresponding to 'fashion (clothing)' in the product type may be "Zb". The code string corresponding to 'shirt' as a lower type of 'fashion (clothing)' in the product type may be "Zb01".

Step S1200 may include providing, by the server, all the obtained learning-specific image data to the client of the expert who assigns and classifies the basic appearance classification criterion. Only the learning-specific image data of the type of a product to which the specialized appearance classification criterion is applied is provided to a client of the expert who assigns and classifies the specialized appearance classification criterion.

That is, in an embodiment, the provision of unnecessary data may be minimized by providing only the learning-specific image data of the type of a product, to which the specialized appearance classification criterion is capable of being applied, to an expert client in charge of the specialized appearance classification criterion, based on the obtained product type information. Accordingly, the efficiency of building a learning-specific dataset may be improved.

For example, for a basic appearance classification criterion applied regardless of a product type, such as 'color', the server may provide all of the obtained learning-specific image data to the expert client in charge of 'color'. On the other hand, because 'neckline' is a specialized appearance classification criterion applied to only the product of 'top' type, the server may provide only the learning-specific image data of 'top' type to an expert client in charge of 'neckline' based on the obtained type information, thereby improving the efficiency of building a learning-specific dataset by reducing the provision of unnecessary learning-specific image data.

In an embodiment, the image data retrieval method may further include setting a combination of a plurality of individual property recognition modules belonging to a specialized appearance property recognition model for a specific type of a product. That is, as illustrated in FIG. 2, with respect to a product having a specific type, the server may set a combination of a basic appearance classification criterion and a specialized appearance classification criterion for the corresponding type, and a combination of an individual property recognition module corresponding thereto.

For example, pants, skirt appearance property recognition model' may be built by setting the combination of 'pants silhouette', 'skirt silhouette', bottom length', and 'waist', which are specialized appearance classification criteria applicable to products of pants, skirt' type, and individual property recognition modules of 'color', 'texture', 'pattern', and 'detail', which are basic appearance classification criteria. In this case, when learning-specific image data for pants, skirt' type product is received, a learning-specific dataset may be efficiently built by transmitting the learning-specific image data for pants, skirt' type product to only the expert client in charge of an appearance classification criterion of an individual property recognition module belonging to pants, skirt appearance property recognition model'.

The server receives an individual appearance property for an appearance classification criterion of each learning-specific image data from the expert client (S1300).

In an embodiment, the server receives the individual appearance property of the learning-specific image data for the corresponding appearance classification criterion from an expert client in charge of the specific appearance classification criterion. For example, when the server provides a plurality of expert clients with specific learning-specific image data for a top, the server may receive 'clothing' individual appearance property from an expert client in charge of 'product type'; the server may receive 'shirt' individual appearance property from an expert client in charge of 'clothing type'; and, the server may receive 'sleeveless' individual appearance property from an expert client in charge of 'sleeve length'.

In an embodiment, the server may receive a code value corresponding to the individual appearance property for the appearance classification criterion from the expert client. This will be described later.

In an embodiment, step S1300 may include receiving, by the server, a detailed individual appearance property of the learning-specific image data for the detailed appearance classification criterion from an expert client in charge of the detailed appearance classification criterion. The detailed appearance classification criterion means the lowest appearance classification criterion belonging to each appearance classification criterion. For example, for 'clothing (product type)-shirt (clothing type)-sleeveless (sleeve length)', the 'sleeve length' may be a detailed appearance classification criterion and 'sleeveless' may be a detailed individual appearance property.

A lower appearance classification criterion is a relatively lower appearance classification criterion in association with an upper appearance classification criterion. In an embodiment, a relationship between appearance classification criteria may be set or changed by the server. In addition, one lower appearance classification criterion or lower appearance classification criteria may present for one upper appearance classification criterion.

In an embodiment, the detailed individual appearance property may include individual appearance property information about one or more upper appearance classification criteria for the detailed individual appearance property. In an embodiment, the individual appearance property information about the upper appearance classification criteria included in a specific detailed individual appearance property may be set and stored by the server.

For example, 'sleeveless' that is a detailed individual appearance property may include information about 'clothing' or 'top', which is an individual appearance property of an upper appearance classification criterion of 'sleeve length', which is a detailed appearance classification criterion. That is, in an embodiment, even though the server receives only 'sleeveless' that is a detailed individual appearance property, the server may obtain information of 'clothing' or 'top', which is an individual appearance property for the upper appearance classification criterion.

In an embodiment, as the lower appearance classification criterion of the detailed appearance classification criterion is added, the detailed appearance classification criterion may be changed. For example, when a 'neckline' is additionally set as lower appearance classification criterion of 'clothing type' appearance classification criterion ('product type (clothing)-clothing type (shirt)-neckline (V neck), sleeve length (sleeveless)}'), 'neckline' and 'sleeve length' may be a detailed appearance classification criterion. In an embodiment, as described above, the appearance classification criterion including the detailed appearance classification criterion may be freely set and changed by the server.

In an embodiment, the server may receive individual appearance property by providing learning-specific image data to only the expert client in charge of a plurality of detailed appearance classification criteria other than the upper appearance classification criterion. In this case, the efficiency of building a learning-specific dataset may be increased by providing learning-specific image data to the minimum expert client.

For example, when 'V neck' and 'sleeveless' are received as detailed individual appearance properties by providing specific learning-specific image data to only the expert client in charge of 'neckline' and 'sleeve length', which are detailed appearance classification criteria, the detailed individual appearance property includes information about 'clothing' and 'top', which are individual appearance properties of the upper appearance classification criterion, and thus it is possible to collect sufficient appearance properties.

The server generates appearance description data for each learning-specific image data based on a plurality of individual appearance properties received from a plurality of expert clients for each learning-specific image data and then builds a learning-specific dataset (S1400).

In an embodiment, the server may receive a plurality of individual appearance properties for specific learning-specific image data from an expert client, and may extract and combine code values corresponding to the individual appearance properties. Accordingly, the server may generate appearance description data in a form of a code string.

In another embodiment, the server may receive code values corresponding to a plurality of individual appearance properties for specific learning-specific image data from an expert client. The server may generate appearance description data in a form of a code string by combining the plurality of code values.

Moreover, in an embodiment, the code value corresponding to the lower individual appearance property may include upper individual appearance property information about one or more upper appearance classification criteria of the lower appearance classification criterion to which the lower individual appearance property belongs.

For example, in a code value 'Bb02' corresponding to 'V neck', "B" may include information about "clothing" that is an individual appearance property of an upper appearance classification criterion (product type).

The server builds a learning-specific dataset based on the pieces of learning-specific image data and appearance description data for the learning-specific image data, which are provided to the expert client. The built learning-specific dataset may be used to train one or more appearance property recognition models (i.e., one or more individual property recognition modules).

In an embodiment, the appearance property recognition model may be trained by using the pieces of learning-specific image data included in the learning-specific dataset and one or more individual appearance properties extracted from the corresponding appearance description data. That is, the appearance property recognition model 200 including a plurality of individual property recognition modules may be learned by training the individual property recognition module 210 for a specific appearance classification criterion by using the built learning-specific dataset.

Specifically, to train an appearance property recognition model, the server may perform a process of training each individual property recognition module as follows. The server performs training by matching the learning-specific image data to the individual appearance property of a specific appearance classification criterion labeled for the learning-specific image data. That is, when the server trains the individual property recognition module for 'A' appearance classification criterion, the server extracts only the pieces of learning-specific image data and the individual appearance property of 'A' appearance classification criterion matched to each learning-specific image data from the built learning-specific dataset so as to be entered to a deep learning training model. In this way, the server trains and builds each individual property recognition module capable of recognizing an individual appearance property of each appearance classification criterion.

Returning to FIG. 12, in an embodiment, when an added new appearance classification criterion is a lower appearance classification criterion, step S800 may include providing, by the server, a client of an expert who assigns and classifies the added new appearance classification criterion with only learning-specific image data, which includes a code value corresponding to an individual appearance property of an upper appearance classification criterion of the added new appearance classification criterion, from among the pieces of learning-specific image data included in a learning-specific dataset and obtaining an individual appearance property.

For example, when the added new appearance classification criterion is 'shoulder', is a lower appearance classification criterion for an upper individual appearance property of an upper appearance classification criterion, top (clothing type), and is a specialized appearance classification criterion applicable to only 'top' type product. In this case, it is possible to extract learning-specific image data having appearance description data including 'Zb01 to Zb03', which are code values corresponding to 'top' that is an upper individual appearance property, from among the pieces of learning-specific image data included in the previously-built learning-specific dataset, and to provide an expert client in charge of the 'shoulder' with only the extracted learning-specific image data, thereby minimizing the provision of unnecessary data.

In an embodiment of the inventive concept, when image data is video data including a plurality of frames, the product type information calculating step S100 and the individual appearance property calculating step S200 may be performed for each frame in the video data. The appearance description data generating step S300 may be generated by sequentially listing product type information and a plurality of individual appearance properties for each frame.

An image data retrieval server device according to another embodiment of the inventive concept includes one or more computers and performs the above-described image data retrieval method.

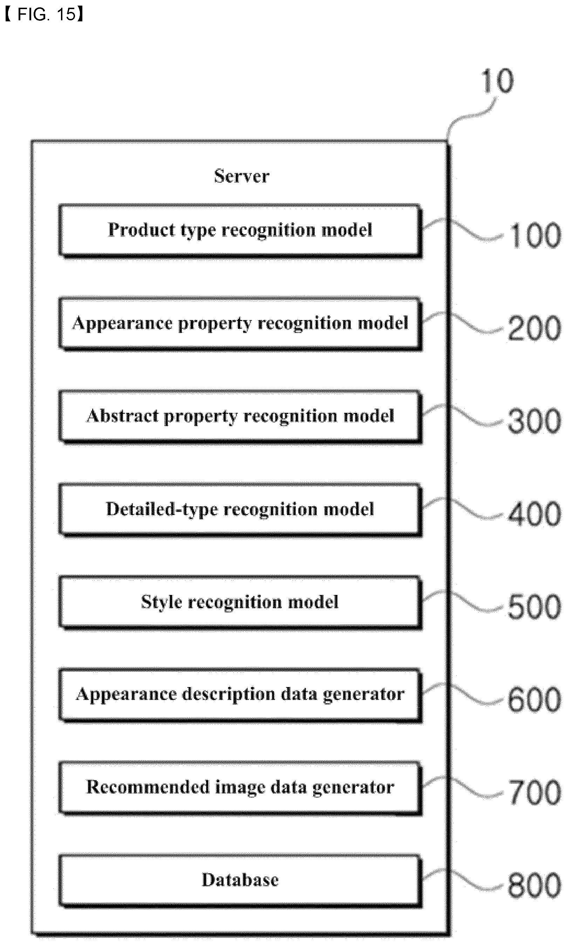

FIG. 15 is a block diagram of an image data retrieval server device, according to an embodiment of the inventive concept.

Referring to FIG. 15, an image data retrieval server device 10 according to an embodiment of the inventive concept includes the appearance property recognition model 200, an appearance description data generator 600, and a database 800, and performs the above-described image data retrieval method.

In various embodiments, the server device 10 may further include one or more of the product type recognition model 100, the abstract property recognition model 300, the detailed-type recognition model 400, a style recognition model 500, or recommended image data generator 700.

Besides, the image data retrieval method according to an embodiment of the inventive concept may be implemented by a program (or an application) and may be stored in a medium such that the program is executed in combination with a computer being hardware.

The above-described program may include a code encoded by using a computer language such as C, C++, JAVA, a machine language, or the like, which a processor (CPU) of the computer may read through the device interface of the computer, such that the computer reads the program and performs the methods implemented with the program. The code may include a functional code related to a function that defines necessary functions executing the method, and the functions may include an execution procedure related control code necessary for the processor of the computer to execute the functions in its procedures. Furthermore, the code may further include a memory reference related code on which location (address) of an internal or external memory of the computer should be referenced by the media or additional information necessary for the processor of the computer to execute the functions. Further, when the processor of the computer is required to perform communication with another computer or the server 10 in a remote site to allow the processor of the computer to execute the functions, the code may further include a communication related code on how the processor of the computer executes communication with another computer or the server 10 or which information or medium should be transmitted and received during communication by using a communication module of the computer.

The stored medium refers not to a medium, such as a register, a cache, or a memory, which stores data for a short time but to a medium that stores data semi-permanently and is read by a device. Specifically, for example, the stored media include, but are not limited to, ROM, RAM, CD-ROM, magnetic tape, floppy disk, optical data storage device, and the like. That is, the program may be stored in various recording media on various servers 10 that the computer may access, or various recording media on the computer of the user. Further, the media may be dispersed in a computer system connected to the medium through a network, and codes that may be read by the computer in a dispersion manner may be stored.

Although embodiments of the inventive concept have been described herein with reference to accompanying drawings, it should be understood by those skilled in the art that the inventive concept may be embodied in other specific forms without departing from the spirit or essential features thereof. Therefore, the above-described embodiments are exemplary in all aspects, and should be construed not to be restrictive.

## Claims

1. A method of retrieving image data, the method comprising:
calculating, by a server, an individual appearance property for a plurality of appearance classification criteria by entering image data into an appearance property recognition model; and
generating, by the server, appearance description data by combining a plurality of individual appearance properties calculated for the image data,
wherein the appearance classification criteria are specific classification criteria for describing an appearance of a specific product and include a plurality of individual appearance properties that express various appearance properties in an identical classification criterion of the product.

2. The method of claim 1, wherein the appearance property recognition model includes a plurality of individual property recognition modules for determining different appearance classification criteria,
wherein the individual property recognition modules calculate an individual appearance property included in a specific appearance classification criterion, and
wherein the calculating of the individual appearance property includes:
calculating a plurality of individual appearance properties for the image data by entering the image data into each of the plurality of individual property recognition modules in the appearance property recognition model.

3. The method of claim 1, wherein the generating of the appearance description data includes:
extracting a plurality of code values respectively corresponding to the plurality of individual appearance properties; and
generating the appearance description data in a form of a code string by combining the plurality of code values.

4. The method of claim 1, further comprising:
before the calculating of the individual appearance property, calculating, by the server, product type information by entering image data to a product type recognition model,
wherein the calculating of the individual appearance property includes:
calculating the plurality of individual appearance properties by entering the image data into a specialized appearance property recognition model corresponding to the calculated product type information, and
wherein the specialized appearance property recognition model is an appearance property recognition model including an individual property recognition module of a plurality of predetermined appearance classification criteria so as to be applied depending on specific product type information.

5. The method of claim 4, further comprising:
when it is impossible to calculate an individual appearance property for an appearance classification criterion of the specialized appearance property recognition model, calculating, by the server, product type information, which is different from product type information thus previously calculated, by entering the image data into the product type recognition model again.

6. The method of claim 1, further comprising:
calculating, by the server, an abstract property based on the calculated plurality of individual appearance properties,
wherein the appearance description data further includes the abstract property calculated for the image data.

7. The method of claim 6, wherein the calculating of the abstract property includes:
summing, by the server, a score for each abstract property based on a plurality of individual appearance properties calculated for the image data, wherein a score for each of a plurality of abstract properties is set for each individual appearance property.

8. The method of claim 2, further comprising:
as the server receives a search keyword from a specific user, extracting, by the server, image data corresponding to an appearance classification criterion combination matching an abstract property corresponding to the search keyword in a matching algorithm.

9. The method of claim 8, wherein the generating of the appearance description data includes:
when there is an unlearned appearance classification criterion in which an individual property recognition module is not built,
generating the appearance description data by combining an input individual appearance property and a calculation individual appearance property, wherein the input individual appearance property is obtained from an image provider client or an expert client providing the image data with respect to the unlearned appearance classification criterion, and the calculation individual appearance property is calculated as the image data is entered into the individual property recognition module.

10. The method of claim 8, further comprising:
when a new appearance classification criterion for a specific product is added,
obtaining, by the server, an individual appearance property of a new appearance classification criterion for learning-specific image data, and building a new learning dataset; and
training a new individual property recognition module based on the new learning dataset and adding the trained new individual property recognition module to the appearance property recognition model.

11. The method of claim 10, further comprising:
adding, by the server, detailed information for a new appearance classification criterion by entering image data, from which the appearance description data is obtained by an already-built individual property recognition module, into a new individual property recognition module; and
updating, by the server, the matching algorithm by matching the individual appearance property of the new appearance classification criterion to each abstract property.

12. The method of claim 8, further comprising:
as the server receives an additional image data providing request from a user client, sequentially providing, by the server, image data having at least one different individual appearance property; and
when a piece of image data or pieces of image data are selected from additional image data by a user, setting, by the server, a personalized abstract property based on appearance description data of the selected image data.

13. The method of claim 1, further comprising:
obtaining, by the server, reference image data from a user client, wherein the reference image data is a criterion for searching for an image having a similar appearance property in an identical product;
calculating plurality of individual appearance properties for a plurality of appearance classification criteria by entering the reference image data into the appearance property recognition model;
generating, by the server, appearance description data by combining the plurality of individual appearance properties for the reference image data; and
extracting, by the server, image data including appearance description data identical to the reference image data.

14. An image data retrieval server device including one or more computers and performing a method of one of claims 1 to 13.

15. An image data retrieval program, the program being stored in a medium to be combined with a computer, which is hardware, and to perform a method of one of claims 1 to 13.
